# EUROPÄISCHE PATENTSCHRIFT

(11) **EP 1 311 042 B1**
(45) Veröffentlichungstag und Bekanntmachung des Hinweises auf die Patenterteilung: **23.03.2011**
(21) Anmeldenummer: 02018468.5
(22) Anmeldetag: 16.08.2002
(51) Int. Cl.: H02G 3/14

(54) **Elektrische Installationsdose**
Electrical installation box
Boîtier d' instalation électrique

(30) Priorität: 08.11.2001 DE 20118064 U; 28.11.2001 DE 20119272 U
(43) Veröffentlichungstag der Anmeldung: 14.05.2003
(60) Teilanmeldung: 10186146.6
(73) Patentinhaber: Günther Spelsberg GmbH & Co. KG, 58579 Schalksmühle (DE)
(72) Erfinder: Heins, Peter, 58566 Kierspe (DE); Overbeck, Hans-Dieter, 51709 Marienheide (DE); Quardt, Dirk, Dipl.-Ing., 58638 Iserlohn (DE); Schmidt, Wieland, Dipl.-Ing., 58553 Halver (DE); Schulte, Hans, 58553 Halver (DE); Spelsberg, Holger, Dipl.-Ing., 58509 Lüdenscheid (DE); Werkshagen, Bernd, 58579 Schalksmühle (DE)
(74) Vertreter: Michalski Hüttermann & Partner Patentanwälte

(56) Entgegenhaltungen:
- EP-A- 1 058 362
- DE-U- 29 616 804
- US-A- 4 967 924

## Beschreibung

Die Erfindung betrifft eine elektrische Installationsdose gemäß dem Oberbegriff des Patentanspruchs 1.

Mit dem Begriff "elektrische Installationsdose" sind solche elektrischen Dosen gemeint, denen elektrische Kabel zugeführt werden und/oder von denen elektrische Kabel abgeführt werden, wobei die elektrischen Kabel in der elektrischen Installationsdose miteinander verbunden sind und/oder weitere Installationen in der elektrischen Installationsdose vorgesehen sind. Im einfachsten Fall kann es sich bei der elektrischen Installationsdose um eine gemeinhin als Verbindungsdose bezeichnete Dose handeln, die typischerweise an einer Wand befestigt wird und zur Herstellung von Schaltungen z. B. für die Hausinstallation dient.

Solche elektrischen Installationsdosen weisen einen Deckel auf, der zum Verschließen des Gehäuses auf dieses aufsetzbar ist. Der Deckel ist wieder von dem Gehäuse lösbar, um somit weiterhin Zugang zu der in der elektrischen Installationsdose realisierten Schaltung bzw. den dort vorgesehenen Installationen zu erhalten. Häufig ist der Deckel an dem Gehäuse dadurch lösbar befestigt, daß der Deckel zum Verschließen des Gehäuses auf dieses aufgedrückt wird und Deckel und Gehäuse mittels an diesen vorgesehenen Verrasteinrichtungen miteinander verrasten. Zum Lösen des Deckels von dem Gehäuse ist dann typischerweise ein Werkzeug, wie ein Schraubenzieher, erforderlich, das zwischen Deckel und Gehäuse geführt und mit dem der Deckel von dem Gehäuse abgehebelt wird.

Bei der Anbringung und Bestückung einer elektrischen Installationsdose wird im allgemeinen so vorgegangen, daß die elektrische Installationsdose zuerst an der Wand angebracht wird und danach mit Kabeln und gegebenenfalls weiteren Installationen versehen wird. Sowohl beim Anbringen der elektrischen Installationsdose an die Wand als auch beim Installieren der Kabel usw. darf das Gehäuse nicht mit dem Deckel verschlossen sein, da ansonsten der Innenraum des Gehäuses zur Installation nicht zugänglich wäre. Der Deckel muß also von dem Gehäuse entfernt und an einem anderen Platz aufbewahrt werden, bis die Montage und Installation der elektrischen Installationsdose beendet ist und das Gehäuse wieder mit dem Deckel verschlossen werden soll. Dabei besteht die Gefahr, daß der Deckel verlorengeht.

Dieser Gefahr, daß der Deckel verlorengeht, ist bisher z. B. dadurch begegnet worden, daß der Deckel mit dem Gehäuse mittels eines flexiblen Bändchens fest verbunden ist. Auf diese Weise kann der Deckel zumindest nicht ohne weiteres von dem Gehäuse entfernt werden, so daß ein Verlieren des Deckels praktisch ausgeschlossen ist. Jedoch ergibt sich bei dieser Lösung ein Problem dadurch, daß der Deckel immer am Gehäuse verbleiben muß, so daß z. B. auch ein Beschriften des Deckels in diesem Zustand erfolgen muß. Ein Beschriften z. B. an einem separaten Platz und/oder mit einer separaten Einrichtung ist dann nicht mehr möglich.

Diesem Problem kann dadurch begegnet werden, daß an dem Deckel oder/und an dem Gehäuse wenigstens ein Befestigungsmittel vorgesehen ist, mit dem der Deckel an dem Gehäuse derart lösbar befestigbar ist, daß der Innenraum des Gehäuse wenigstens teilweise von außen zugänglich ist.

Durch das Befestigungsmittel an dem Deckel oder/und an dem Gehäuse wird also neben dem Verschließen des Gehäuses mit dem Deckel wenigstens eine zweite Möglichkeit realisiert, den Deckel an dem Gehäuse zu befestigen, wobei bei dieser zweiten Befestigungsmöglichkeit der Innenraum des Gehäuses wenigstens teilweise von außen zugänglich ist, so daß im Innenraum des Gehäuses Montage- und Installationsarbeiten möglich sind.

Grundsätzlich ist es dabei nicht erforderlich, daß der gesamte Innenraum der elektrischen Installationsdose zugänglich ist, sofern zumindest der Innenraum des Gehäuses erreicht werden kann, der für die Montage- und Installationsarbeiten erforderlich ist. Es kann vorgesehen sein, daß der Innenraum des Gehäuses vollständig von außen zugänglich ist. Auf diese Weise wird nämlich eine universelle Einsetzbarkeit der elektrischen Installationsdose gewährleistet.

Grundsätzlich sind eine Vielzahl von Befestigungsmitteln denkbar, mit denen der Deckel an dem Gehäuse lösbar befestigt werden kann. Es können solche Befestigungsmittel vorgesehen sein, mit denen der Deckel an das Gehäuse ansteckbar ist. Vorzugsweise erfolgt ein solches Anstecken des Deckels an das Gehäuse seitlich, d. h. derart, daß sich der Deckel in angestecktem Zustand seitlich neben dem Gehäuse befindet. Dies bedeutet nicht zwangläufig, daß das Anstecken selbst auch von der Seite her erfolgen muß. Es können nämlich auch solche Befestigungsmittel vorgesehen sein, mit denen ein Anstecken von vorne erfolgt.

Bezüglich der Befestigungsmittel, mit denen ein Anstecken des Deckels an das Gehäuse erfolgen kann, ist eine Vielzahl von Variationen denkbar. Gemäß einer Möglichkeit ist jedoch vorgesehen, daß zum Anstecken des Deckels an das Gehäuse als Befestigungsmittel ein System vorgesehen ist, das einen federartigen Vorsprung und eine diesem zugeordnete Nut aufweist. Dazu kann z. B. die Nut in einem seitlich an dem Deckel oder dem Gehäuse hervorstehenden Ansatz ausgebildet sein, wobei der federartige Vorsprung seitlich an dem Gehäuse bzw. an dem Deckel vorgesehen ist.

Diese Ausführungsform ist insbesondere dann besonders vorteilhaft, wenn die Nut und der federartige Vorsprung derart angeordnet sind, daß bei auf das Gehäuse aufgesetztem Deckel der Ansatz mit der Nut dem federartigen Vorsprung parallel gegenüberliegt und im Abstand von diesem angeordnet ist. Dann werden nämlich durch den Ansatz mit der Nut einerseits und dem federartigen Vorsprung andererseits Ansatzflächen für ein Werkzeug, wie einen Schraubenzieher, zum Ablösen des Deckels von dem Gehäuse bereitgestellt. Durch diese Anordnung muß der Schraubenzieher also nicht mehr auf schwierige Weise und teilweise unter Verletzung des Deckels und des Gehäuses in einen geringen Zwischenraum zwischen Deckel und Gehäuse eingebracht werden, sondern es wird eine eigens dafür vorgesehene Öffnungshilfe bereitgestellt, mit Hilfe derer der Deckel auf einfache Weise von dem Gehäuse gelöst werden kann, ohne daß Deckel oder Gehäuse beschädigt werden. Bei dieser Weiterbildung weist das Befestigungsmittel also eine Doppelfunktion auf: Einerseits ermöglicht es ein seitliches Anstecken des Deckels an das Gehäuse und andererseits stellt es eine Öffnungshilfe dar.

Alternativ dazu kann als Befestigungsmittel der dem Boden des Gehäuses abgewandte Bereich einer Seitenwand des Gehäuses dienen, der mit einer am Deckel vorgesehenen, an ihren Enden offenen Nut zusammenwirkt. Dabei ist es besonders bevorzugt, daß die Nut am Rand des Deckels vorgesehen ist. Insbesondere ist nämlich auf diese Weise eine solche Nut im Deckel nutzbar, die ansonsten zum Verschließen des Gehäuses mit einer Seitenwand des Gehäuses zusammenwirkt. Dadurch, daß die Enden dieser Nut offen sind, läßt sich der Deckel nunmehr auch derart auf das Gehäuse aufstecken, daß der Deckel den Innenraum des Gehäuses nicht verschließt, sondern seitlich von dem Gehäuse wegsteht.

Schließlich ist gemäß einer weiteren Weiterbildung vorgesehen, daß als Befestigungsmittel am Deckel eine Halteklammer vorgesehen ist, die im wesentlichen parallel zu einer Seitenwand des Deckels verläuft. Der Deckel kann dann derart auf eine Seitenwand des Gehäuses aufgesteckt werden, daß die Seitenwand des Gehäuses zwischen der Halteklammer und der Seitenwand des Deckels zu liegen kommt. Diese Lösung ist besonders einfach, da lediglich am Deckel ein Befestigungsmittel, nämlich die Halteklammer, vorgesehen werden muß und ansonsten der obere Bereich der ohnehin schon vorhandenen Seitenwand des Gehäuses verwendet werden kann.

Die DE 296 16 804 U1 beschreibt eine Kabelverteilerdose, insbesondere für Aufputzmontage, mit einem aus einer Bodenwand und einer Seitenwandung bestehenden Gehäuse sowie einem auf die Stirnränder der Seitenwandung aufsetzbaren Deckel. Die Kabelverteilerdose umfasst eine zusätzliche Verbindung zwischen dem Deckel und dem Gehäuse, welche eine begrenzte Bewegung und/oder ein begrenztes Entfernen des noch nicht auf dem Gehäuse aufgesetzten bzw. von dem Gehäuse abgenommenen Deckels gegenüber dem Gehäuse zulässt, derart, dass einerseits der Gehäuse-Innenraum zugänglich ist und andererseits der Deckel in unmittelbarer Nähe und fest verbunden mit dem Gehäuse verbleibt.

Die US 4,967,924 beschreibt eine Abdeckungsbefestigungseinheit zur Verwendung in einer elektrischen Verbindungsbox umfassend einen Verbindungsbox-Körper und eine darauf befestigte Abdeckung, wobei die Abdeckung ein Quetschteil aufweist.

Die EP 1 058 362 A1 beschreibt ein Gehäuse einer elektrischen Ausrüstung umfassend zwei unterscheidbare Teile mit einer Abdeckung und einem Behälter, wobei ein Befestigungskabel die Abdeckung mit dem Behälter verbindet.

Es ist die Aufgabe der Erfindung, eine Möglichkeit bereitzustellen, elektrische Installationsdosen stabil an einem Träger bzw. einem Rohr zu befestigen, ohne dass es zu Verknickungen eines durch die Öse hindurchgeführten Kabelbinders kommt.

Diese Aufgabe wird durch den Gegenstand des Patentanspruchs 1 gelöst. Bevorzugte Weiterbildungen sind in den Unteransprüchen beschrieben.

Allgemein bekannt ist es, daß an dem Gehäuse Befestigungslaschen mit Bohrungen in Normalenrichtung des Bodens des Gehäuses vorgesehen sind. Mittels dieser Bohrungen läßt sich das Gehäuse z. B. mit Hilfe von Schrauben an einer Wand befestigen, so daß der Boden des Gehäuses an der Wand anliegt. Teilweise ist es jedoch erforderlich, daß das Gehäuse nicht an einer Wand, sondern an einem Träger oder einem Rohr befestigt werden muß, wobei an dem Träger bzw. dem Rohr keine Befestigung mittels Schrauben möglich ist. In einem solchen Fall ist durch die zuvor beschriebene elektrische Installationsdose, die Befestigungslaschen mit einer Öse aufweist, deren Durchführungsrichtung parallel zum Boden des Gehäuses und parallel zu einer Seitenwand des Gehäuses verläuft, auf einfache Weise möglich, das Gehäuse mittels einer Bindetechnik, z. B. mit Hilfe von Kabelbindern, an dem Träger bzw. dem Rohr zu befestigen. Dadurch, daß die Durchführungsrichtung der Öse parallel zum Boden des Gehäuses und parallel zur Seitenwand des Gehäuses verläuft, kommt es zu keinen Verknickungen eines durch die Öse hindurchgeführten Kabelbinders, wie dies der Fall wäre, wenn der Kabelbinder durch eine aus dem Stand der Technik bekannte Bohrung geführt werden würde, deren Durchführungsrichtung der Normalenrichtung des Bodens des Gehäuses entspricht.

Es ist möglich, solche elektrischen Installationsdosen bereitzustellen, bei denen die Befestigungslasche lediglich die in Rede stehende Öse aufweist. Gemäß einer bevorzugten Weiterbildung der Erfindung ist jedoch vorgesehen, daß zusätzlich zu der Öse die Befestigungslasche eine schon aus dem Stand der Technik bekannte Bohrung aufweist, die in Normalenrichtung zum Boden des Gehäuses verläuft. Auf diese Weise ist ein universeller Einsatz der elektrischen Installationsdose möglich: Die elektrische Installationsdose kann nämlich auf diese Weise sowohl an eine Wand angeschraubt als auch an einem Träger oder einem Rohr mittels einer Bindetechnik befestigt werden.

Grundsätzlich ist das Vorsehen von lediglich einer Befestigungslasche mit lediglich einer Öse ausreichend. Eine stabilere Befestigung der elektrischen Installationsdose läßt sich jedoch dadurch realisieren, daß gemäß einer bevorzugten Weiterbildung der Erfindung vorgesehen ist, daß an dem Gehäuse zwei Befestigungslaschen an einander gegenüberliegenden Seiten vorgesehen sind, die vorzugsweise jeweils zwei Ösen aufweisen. Dabei sind die Ösen einer jeden Befestigungslasche vorzugsweise hintereinander angeordnet.

Gemäß einer weiteren bevorzugten Weiterbildung der Erfindungist auf der Außenseite des Deckels eine vorzugsweise rechteckige Vertiefung vorgesehen. Dadurch wird ein eigener Platz für eine Beschriftung des Deckels geschaffen, wobei die Vertiefung insofern vorteilhaft ist, als daß bei einer direkten Beschriftung des Deckels die Beschriftung aufgrund der Vertiefung besser gegen ein Verwischen geschützt ist. Erfolgt die Beschriftung mit einem separaten Aufkleber, so ist auch ein solcher Aufkleber im Bereich der Vertiefung gegen mechanische Einflüsse, die zu einem Ablösen des Aufklebers führen könnten, besser geschützt.

Vorzugsweise ist die Vertiefung eben, d. h. ihre Fläche verläuft parallel zur restlichen Fläche des Deckels. Eine solche ebene Vertiefung läßt sich besonders einfach beschriften bzw. mit einem Aufkleber versehen. Die Absenkung der Vertiefung gegenüber dem Rest des Deckels liegt vorzugsweise zwischen 0,5 und 3 mm. Ganz besonders bevorzugt ist eine Absenkung um ca. 1 mm. Schließlich ist gemäß einer bevorzugten Weiterbildung der Erfindung vorgesehen, daß die Vertiefung in eine Ecke des Deckels vorgesehen ist. Ist ein solcher Deckel, bei der die Vertiefung in eine Ecke vorgesehen ist, derart angeordnet, daß sich die Vertiefung in der linken oberen Ecke befindet, so ist das Beschriften für einen Rechtshänder erleichtert, da dieser seine Hand im verbleibenden Bereich ablegen kann. Für Linkshänder gilt entsprechendes.

Im einzelnen gibt es nun eine Vielzahl von Möglichkeiten, die elektrische Installationsdose auszugestalten und weiterzubilden. Dazu wird auf die Unteransprüche sowie die nachfolgende detaillierte Beschreibung bevorzugter Ausführungsbeispiele der Erfindung unter Bezugnahme auf die Zeichnungen verwiesen.

In der Zeichnung zeigt
- Fig. 1: eine elektrische Installationsdose gemäß einem ersten bevorzugten Ausführungsbeispiel der Erfindung in geschlossenem Zustand,
- Fig. 2: die elektrische Installationsdose gemäß dem ersten bevorzugten Ausführungsbeispiel der Erfindung in geöffnetem Zustand,
- Fig. 3: die elektrische Installationsdose gemäß dem ersten bevorzugten Ausführungsbeispiel der Erfindung in geöffnetem Zustand mit an- gestecktem Deckel,
- Fig. 4: die elektrische Installationsdose gemäß dem ersten bevorzugten Ausführungsbeispiel der Erfindung ebenfalls in geöffnetem Zustand mit angestecktem Deckel in anderer Orientierung,
- Fig. 5: die elektrische Installationsdose gemäß dem ersten bevorzugten Ausführungsbeispiel der Erfindung, die mit Hilfe eines Schrauben- ziehers geöffnet wird,
- Fig. 6: die elektrische Installationsdose gemäß dem ersten bevorzugten Ausführungsbeispiel der Erfindung in einem an einem Träger ange- brachten Zustand,
- Fig. 7a, b: eine elektrische Installationsdose gemäß einem zweiten bevorzug- ten Ausführungsbeispiel der Erfindung und
- Fig. 8: eine elektrische Installationsdose gemäß einem dritten bevorzugten Ausführungsbeispiel der Erfindung in einer Ausschnittsvergrößerung.

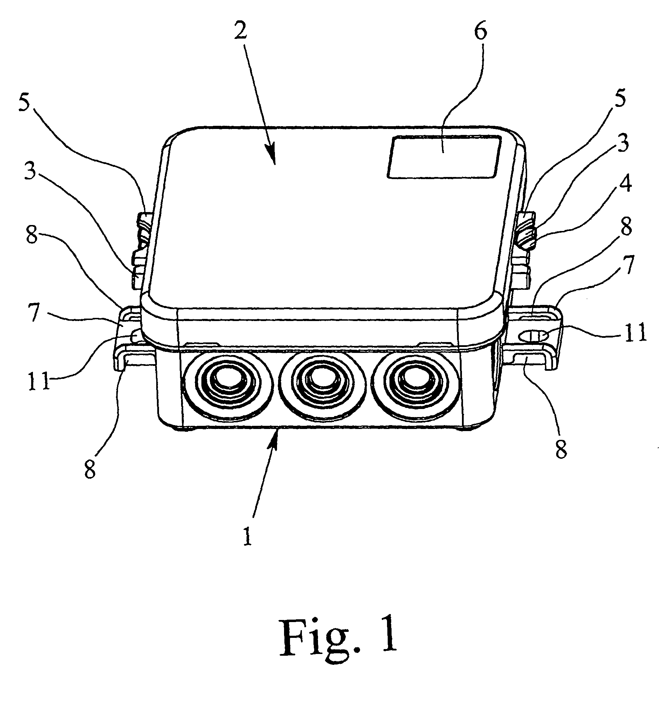

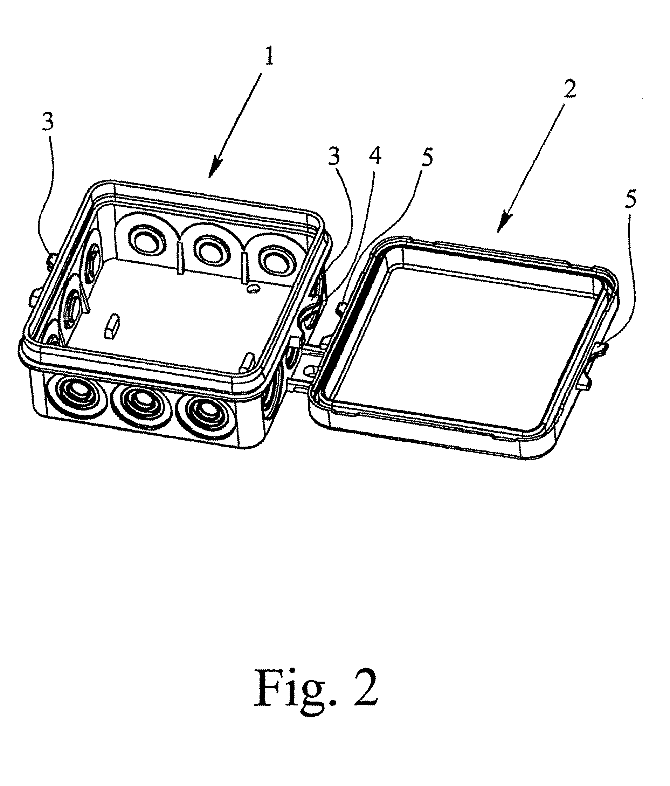

Aus den Fig. 1 bis 6 ist eine elektrische Installationsdose gemäß einem ersten bevorzugten Ausführungsbeispiel der Erfindung ersichtlich. Die elektrische Installationsdose weist ein Gehäuse 1 sowie einen Deckel 2 auf. Zum Verschließen des Gehäuses 1 kann der Deckel 2 auf die offene Seite des Gehäuses 1 augedrückt werden, wodurch er dort verrastet und fest mit dem Gehäuse 1 verbunden ist. Auf zwei einander gegenüberliegenden Seiten weist das Gehäuse 1 hervorstehende Ansätze 3 auf, in denen jeweils eine Nut 4 ausgebildet ist. An dem Deckel 2 sind an zwei einander gegenüberliegenden Seiten jeweils der Nut 4 entsprechende federartige Vorsprünge 5 ausgebildet.

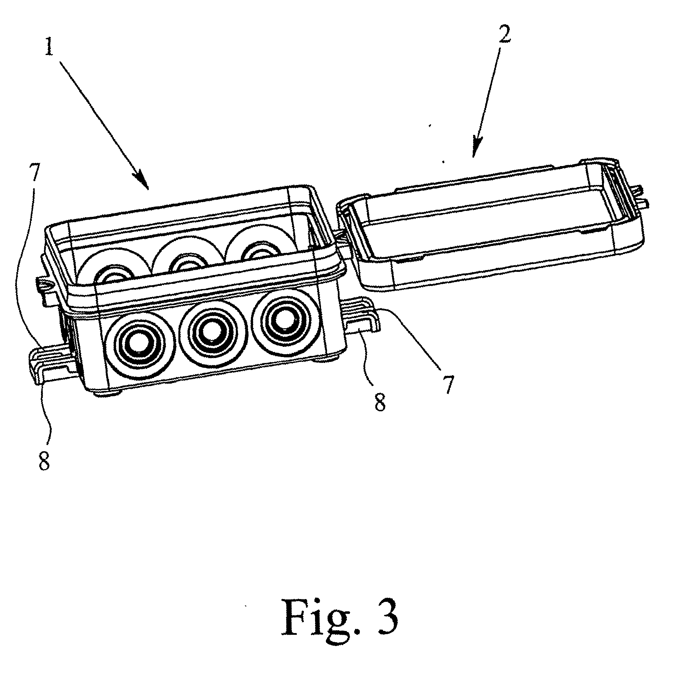

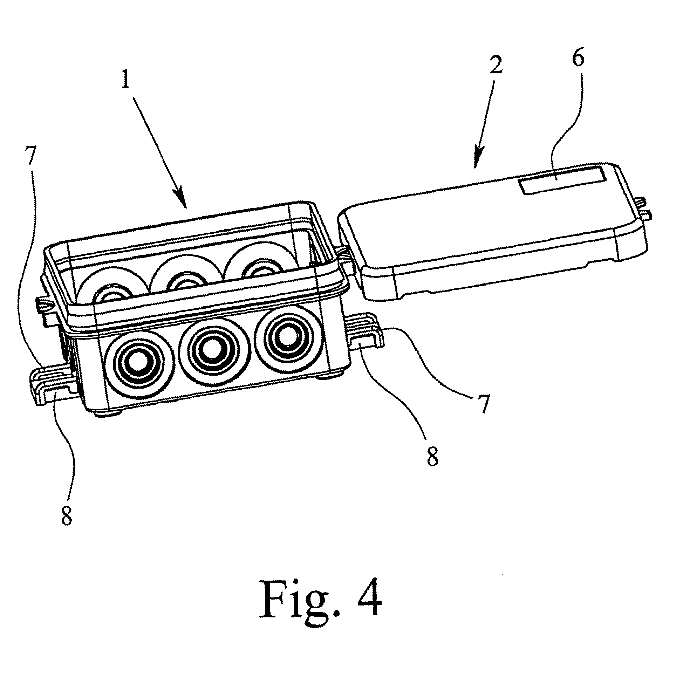

Bei abgenommenen Deckel 2 kann dieser durch Einstecken eines federartigen Vorsprungs 5 in eine Nut 4 an dem Gehäuse 1 befestigt werden. Dabei ist es, wie aus den Fig. 3 und 4 ersichtlich, möglich, den Deckel 2 mit seiner Außenseite nach vorne oder nach hinten einzustecken.

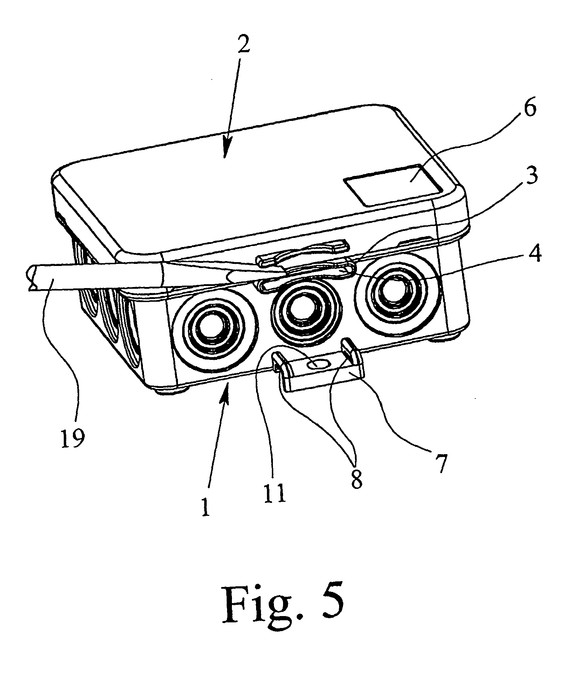

In dem Zustand, in dem der Deckel 2 seitlich an das Gehäuse 1 angesteckt ist, ist der Innenraum des Gehäuses 1 frei zugänglich, so daß die erforderlichen Montage- und Installationsarbeiten durchgeführt werden können. Der Deckel 2 stört dabei nicht, kann jedoch auch nicht verlorengehen. Nach Beendigung der Montage- und Installationsarbeiten wird der Deckel 2 einfach auf das Gehäuse 1 aufgedrückt und mit diesem verrastet. Wie aus Fig. 5 ersichtlich, ist danach ein Ablösen des Deckels 2 von dem Gehäuse 1 auf einfache Weise dadurch möglich, daß die jeweils eine Nut 4 aufweisenden Ansätze 3 bei mit dem Deckel 2 verschlossenem Gehäuse 1 parallel und im Abstand zu den federartigen Vorsprüngen 5 zu liegen kommen, so daß mit Hilfe z. B. eines Schraubenziehers 19 der Deckel 2 von dem Gehäuse 1 auf einfache Weise durch Abhebeln gelöst werden kann.

Bei der in den Fig. 1 bis 6 dargestellten elektrischen Installationsdose gemäß dem ersten bevorzugten Ausführungsbeispiel der Erfindung ist auf der Außenseite des Deckels in einer Ecke eine rechteckige Vertiefung 6 vorgesehen. Diese Vertiefung 6 dient der Beschriftung des Deckels 2 bzw. der Anbringung eines nicht weiter dargestellten Klebeetiketts. Durch die Vertiefung 6 wird die Gefahr eines Verwischens einer Beschriftung vermindert bzw. das Ablösen eines Klebeetiketts erschwert.

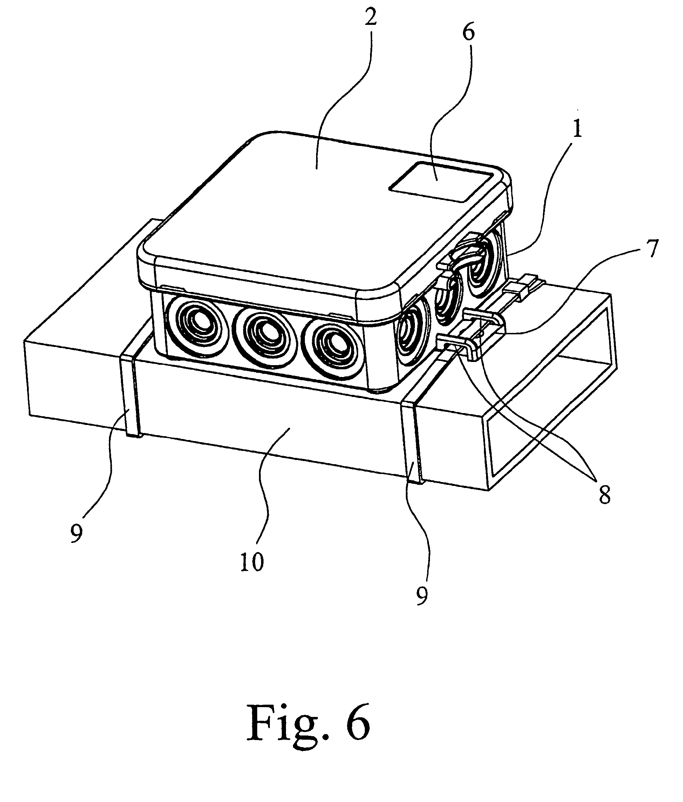

Ferner weist die elektrische Installationsdose gemäß dem ersten bevorzugten Ausführungsbeispiel der Erfindung, wie aus Fig. 1 bis 6 ersichtlich, Befestigungslaschen 7 auf. Jede dieser Befestigungslaschen 7 weist jeweils zwei Ösen 8 auf, die vorliegend als flache Schlitze ausgebildet sind. Diese Ösen 8 sind hintereinander angeordnet, und ihre Durchführungsrichtung verläuft parallel zum Boden des Gehäuses 1 und parallel zu der Seitenwand des Gehäuses 1, an der die Befestigungslaschen 7 angebracht sind. Wie aus Fig. 6 ersichtlich, kann die elektrische Installationsdose gemäß dem ersten bevorzugten Ausführungsbeispiel der Erfindung somit mit Hilfe von Kabelbindern 9 an einem Träger 10 befestigt werden, indem die Kabelbinder 9 durch die Ösen 8 hindurch und um den Träger 10 herum geführt und danach fixiert werden.

Die elektrische Installationsdose gemäß dem ersten bevorzugten Ausführungsbeispiel der Erfindung weist an jeder ihrer Befestigungslaschen 7 zusätzlich zu den Ösen 8 jeweils eine Bohrung 11 auf, deren Längsrichtung in Normalenrichtung des Bodens des Gehäuses 1 verläuft. Auf diese Weise ist ein universeller Einsatz der elektrischen Installationsdose gemäß dem ersten bevorzugten Ausführungsbeispiel der Erfindung möglich, nämlich sowohl eine Anbringung mit Kabelbindern 9, die durch die Ösen 8 hindurch geführt werden, als auch eine herkömmliche Befestigung mit Hilfe von durch die Bohrungen 11 geführten Schrauben an einer Wand.

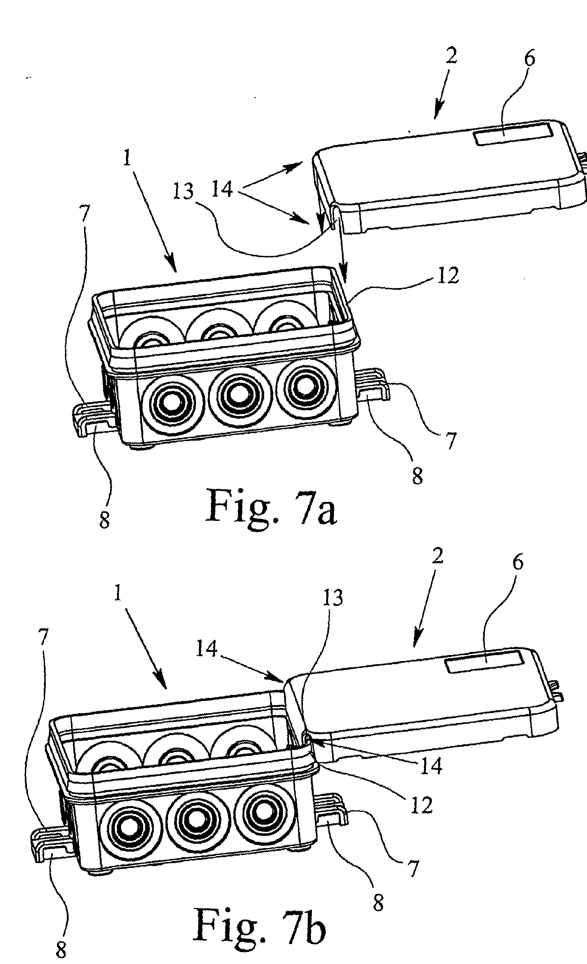

Aus den Fig. 7a und 7b ist eine elektrische Installationsdose gemäß einem zweiten bevorzugten Ausführungsbeispiel der Erfindung ersichtlich. Zum Anstecken des Deckels 2 an das Gehäuse 1 dienen hier einerseits eine Seitenwand 12 des Gehäuses 1 und andererseits eine Nut 13 im Deckel 2. Die Nut 13 im Deckel 2 ist die Nut, mittels der auch ein Aufsetzen des Deckels 2 auf das Gehäuse 1 zum Schließen desselben erfolgt. Um nun den Deckel 2 auch derart an das Gehäuse 1 anstecken zu können, daß der Deckel 2 das Gehäuse 1 nicht verschließt, sondern seitlich von diesem weg weist, weist die Nut 13 offene Enden 14 auf. Auf diese Weise ist, wie aus Fig. 7b ersichtlich, ohne weiteres ein Aufstecken des Deckels 2 auf das Gehäuse 1 derart möglich, daß sich der Deckel 2, ähnlich wie bei dem ersten bevorzugten Ausführungsbeispiel der Erfindung, seitlich neben dem Gehäuse 1 befindet, so daß dessen Innenraum frei zugänglich ist für Montage- und Installationsarbeiten.

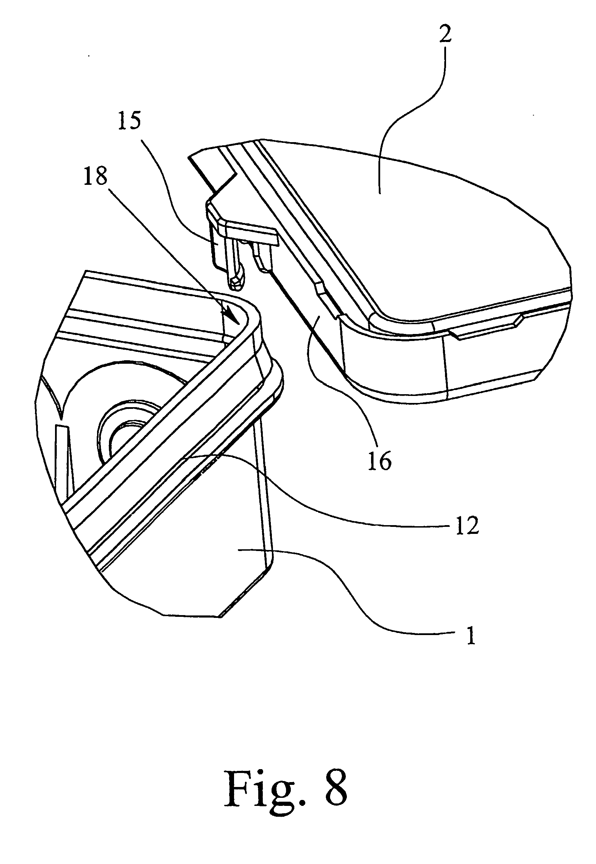

Aus Fig. 8 ist schließlich eine elektrische Installationsdose gemäß einem dritten bevorzugten Ausführungsbeispiel der Erfindung ersichtlich. Bei dieser elektrischen Installationsdose weist der Deckel 2 eine Halteklammer 15 auf, die mit einer Seitenwand 16 des Deckels 2 zusammenwirkt, so daß der Deckel 2 auf eine Seitenwand 12, nämlich auf eine Ecke 18 des Gehäuses 1, aufsteckbar ist.

## Patentansprüche

1. Elektrische Installationsdose, mit einem Gehäuse (1) und einem Deckel (2), wobei an dem Gehäuse (1) eine Befestigungslasche (7) vorgesehen ist, **dadurch gekennzeichnet, dass** die Befestigungslasche (7) eine Öse (8) aufweist, deren Durchführungsrichtung parallel zum Boden des Gehäuses (1) und parallel zu einer Seitenwand (12) des Gehäuses (1) verläuft.

2. Elektrische Installationsdose nach Anspruch 1, **dadurch gekennzeichnet, dass** die Befestigungslasche (7) zwei hintereinander liegende Ösen (8) aufweist, deren Durchführungsrichtung jeweils parallel zum Boden des Gehäuses (1) verläuft.

3. Elektrische Installationsdose nach Anspruch 1 oder 2, **dadurch gekennzeichnet, dass** die Befestigungslasche (7) in Normalenrichtung zum Boden des Gehäuses (1) eine Bohrung (11) aufweist.

4. Elektrische Installationsdose nach einem der Ansprüche 1 bis 3, **dadurch gekennzeichnet, dass** an dem Gehäuse (1) zwei Befestigungslaschen (7) an einander gegenüberliegenden Seiten vorgesehen sind.

5. Elektrische Installationsdose, mit einem Gehäuse (1) und einem Deckel (2) nach einem der Ansprüche 1 bis 4, **dadurch gekennzeichnet, dass** auf der Außenseite des Deckels (2) eine vorzugsweise rechteckige Vertiefung (6) vorgesehen ist.

6. Elektrische Installationsdose nach Anspruch 5, **dadurch gekennzeichnet, dass** die Vertiefung (6) eben ist.

7. Elektrische Installationsdose nach Anspruch 6, **dadurch gekennzeichnet, dass** die Vertiefung (6) gegenüber dem Rest des Deckels (2) um 0,5 bis 3 mm, vorzugsweise um 1 mm, abgesenkt ist.

8. Elektrische Installationsdose nach einem der Ansprüche 5 bis 7, **dadurch gekennzeichnet, dass** die Vertiefung (6) in einer Ecke des Deckels (2) vorgesehen ist.

## Claims

1. Electrical installation box comprising a housing (1) and a cover (2), wherein at the housing (1) a mounting bracket (7) is provided, **characterized in that** the mounting bracket (7) comprises a lug (8), the feed-through direction of which extends parallel to the bottom of the housing (1) and parallel to a side wall (12) of the housing (1).

2. Electrical installation box according to claim 1, **characterized in that** the mounting bracket (7) comprises two lugs (8) disposed consecutively, the feed-through direction of which respectively extends parallel to the bottom of the housing (1).

3. Electrical installation box according to claim 1 or 2, **characterized in that** the mounting bracket (7) comprises a bore (11) extending in a direction normal to the housing (1).

4. Electrical installation box according to any one of claims 1 to 3, **characterized in that** at the housing (1) two mounting brackets (7) are provided at opposing sides to each other.

5. Electrical installation box comprising a housing (1) and a cover (2), according to any one of claims 1 to 4, **characterized in that** at the exterior of the cover (2) a preferably rectangular recess (6) is provided.

6. Electrical installation box according to claim 5, **characterized in that** the recess (6) is planar.

7. Electrical installation box according to claim 6, **characterized in that** the recess (6) is countersunk with respect to the remainder of the cover (2) by 0,5 to 3 mm, preferably 1 mm.

8. Electrical installation box according to any one of claims 5 to 7, **characterized in that** the recess (6) is provided at a corner of the cover (2).

## Revendications

1. Boîte d'installation électrique, avec un boîtier (1) et avec un couvercle (2), une languette de fixation (7) étant prévue sur le boîtier (1), **caractérisée en ce que** la languette de fixation (7) comporte un oeillet (8) dont la direction de traversée est parallèle au fond du boîtier (1) et parallèle à une paroi latérale (12) du boîtier (1).

2. Boîte d'installation électrique selon la revendication 1, **caractérisée en ce que** la languette de fixation (7) comporte deux oeillets (8) qui sont disposés l'un derrière l'autre et dont la direction de traversée est respectivement parallèle au fond du boîtier (1).

3. Boite d'installation électrique selon la revendication 1 ou 2, **caractérisée en ce que** la languette de fixation (7) comporte un trou (11) dans une direction perpendiculaire au fond du boîtier (1).

4. Boîte d'installation électrique selon l'une des revendications 1 à 3, **caractérisée en ce qu'**il est prévu sur le boîtier (1) deux languettes de fixation (7) sur des côtés opposés l'une à l'autre.

5. Boîte d'installation électrique, avec un boîtier (1) et avec un couvercle (2), selon l'une des revendications 1 à 4, **caractérisée en ce qu'**il est prévu sur le côté extérieur du couvercle (2) un creux (6) de préférence rectangulaire.

6. Boîte d'installation électrique selon la revendication 5, **caractérisée en ce que** le creux (6) est plat.

7. Boîte d'installation électrique selon la revendication 6, **caractérisée en ce que** le creux (6) forme une dépression de 0,5 à 3 min, de préférence de 1 mm, par rapport au reste du couvercle (2).

8. Boîte d'installation électrique selon l'une des revendications 5 à 7, **caractérisée en ce que** le creux (6) est prévu dans un coin du couvercle (2).
